# EUROPEAN PATENT APPLICATION

(11) **EP 3 291 605 A1**
(43) Date of publication of application: **07.03.2018**
(21) Application number: 16786141.8
(22) Date of filing: 26.04.2016
(51) Int. Cl.: H04W 36/14, H04W 48/18, H04W 92/12

(54) **COMMUNICATION METHOD, COMMUNICATION SYSTEM, BASE STATION FOR MOBILE COMMUNICATION, AND COMMUNICATION APPARATUS FOR WIRELESS LAN**

(30) Priority: 28.04.2015 JP 2015091319
(71) Applicant: NEC Corporation, Tokyo 108-8001 (JP)
(72) Inventor: ONISHI, Shinji, Tokyo 108-8001 (JP); MIZUKAMI, Daisuke, Tokyo 108-8001 (JP); SHIGA, Shingo, Tokyo 108-8001 (JP); EGASHIRA, Kazuhiro, Tokyo 108-8001 (JP); TAMURA, Toshiyuki, Tokyo 108-8001 (JP)
(74) Representative: MacDougall, Alan John Shaw
(86) International application number: PCT/JP2016/002187
(87) International publication number: WO 2016/174864

(57) **Abstract**

An exemplary object is to provide a communication system capable of seamlessly providing a service with utilization of MEC even when a communication terminal has moved across a wireless LAN communication area in a mobile communication area formed by a base station. The communication system according to the present invention includes a base station (10) that forms a mobile communication area, an access point (20) that forms a wireless LAN communication area, and an application server (40) that provides application services to a communication terminal (50) located in the mobile communication area. When the communication terminal (50) has moved into the wireless LAN communication area in the mobile communication area, the access point (20) sets a data transmission path with the base station (10) and relays data transmission between the base station (10) and the communication terminal (50).

## Description

### Technical Field

The present invention relates to a communication system, a base station, an access point, a terminal, a communication method, a relay method and a program and, particularly, to a communication system, a base station, an access point, a communication method, a relay method and a program that perform wireless LAN communication.

### Background Art

With the rapid proliferation of smartphones nowadays, users having smartphones have increasing opportunities to access the Internet and receive various services through the smartphones. Further, a study is being conducted about providing users in the future having smartphones or the like with services with less delay and a broader band than at present. In relation to providing services with less delay and a broader band, a communication system using MEC (Mobile Edge Computing) is disclosed in Non Patent Literature 1.

The MEC is an apparatus that provides an application service or the like by placing Cloud computing resources in close proximity to RAN (Radio Access Network) near a mobile subscriber. The mobile subscriber is a subscriber who has a subscription contract with a mobile carrier and can use a cell phone, a smartphone or the like through a mobile network. Data transmission with less delay can be achieved by placing the MEC that provides an application service at a position near a mobile subscriber.

Further, with the recent rapid proliferation of smartphones, a sharp increase in data in a mobile network has become an issue. Thus, a mobile carrier constructs a wireless LAN (Local Area Network) communication area and offloads the traffic of a mobile network to a wireless LAN system to thereby reduce the data communicated in the mobile network. As wireless LAN communication areas increase so as to increase the offloading to a wireless LAN system, the opportunities for users having smartphones or the like to access a wireless LAN system increase accordingly.

Therefore, it is expected in the future that wireless LAN communication areas will be scattered in a mobile communication area that is formed by a base station managed by a mobile carrier of a mobile network. Further, it is also expected that the opportunities to accommodate the traffic of a wireless LAN system in a core network in order to provide mobile subscribers with seamless handover between a mobile communication area and a wireless LAN communication area will increase.

### Citation List

### Non Patent Literature

NPL1: Mobile-Edge Computing-Introductory Technical White Paper September 2014

### Summary of Invention

### Technical Problem

The MEC is placed in close proximity to a base station. Therefore, when the MEC is placed in close proximity to a base station which a communication terminal communicates with, the communication terminal can receive services provided by the MEC. However, there is a case where a communication terminal moves in a mobile communication area and enters a wireless LAN communication area that is scattered in the mobile communication area. In the case where a communication terminal has moved into the wireless LAN communication area, the traffic related to the communication terminal is offloaded from a mobile network to a wireless LAN system. The traffic that is offloaded to the wireless LAN system cannot go through a base station of the mobile network, which causes a problem that the communication terminal cannot seamlessly receive a service with utilization of the MEC in close proximity to the base station. Note that this problem occurs not just for services provided by the MEC, but also for services provided by the mobile network.

An exemplary object of the present invention is to provide a communication system, a base station, an access point, a terminal, a communication method, a relay method and a program that can continuously receive services provided in a mobile network even when a communication terminal is connected to a wireless LAN communication system in a mobile communication area in the environment where wireless LAN communication areas are scattered in the mobile communication area.

### Solution to Problem

A communication system according to a first exemplary aspect of the present invention includes a base station that forms a mobile communication area, an access point that forms a wireless LAN communication area in a mobile communication area, and an application server that provides application services to a communication terminal located in the mobile communication area through the base station, wherein when the communication terminal has moved, in the mobile communication area, from outside of the wireless LAN communication area to inside of the wireless LAN communication area, the access point sets a data transmission path with the base station and relays data transmission between the base station and the communication terminal.

A base station according to a second exemplary aspect of the present invention includes a communication means for setting a data transmission path with an access point when a wireless LAN communication area is formed by the access point in a mobile communication area formed by the base station, and a communication terminal that receives an application service from an application server through the base station has moved, in the mobile communication area, from outside of the wireless LAN communication area to inside of the wireless LAN communication area, and a processing means for performing control to send data related to the application service to the communication terminal through the set data transmission path.

An access point according to a third exemplary aspect of the present invention includes a communication means for forming a wireless LAN communication area in a mobile communication area formed by a base station, and setting a data transmission path with the base station when a communication terminal that receives an application service from an application server through the base station has moved, in the mobile communication area, from outside of the wireless LAN communication area to inside of the wireless LAN communication area, and a processing means for relaying data related to the application service and transmitted between the communication terminal and the base station by using the data transmission path.

A terminal according to a fourth exemplary aspect of the present invention includes a wireless LAN communication means for, when the terminal has moved, in a mobile communication area formed by a base station, from outside of a wireless LAN communication area formed by an access point to inside of the wireless LAN communication area, receiving, from the access point, an application service provided from an application server through a data transmission path set between the base station and the access point.

A communication method according to a fifth exemplary aspect of the present invention includes setting a data transmission path with an access point when a wireless LAN communication area is formed by the access point in a mobile communication area formed by the base station, and a communication terminal that receives an application service from an application server through the base station has moved, in the mobile communication area, from outside of the wireless LAN communication area to inside of the wireless LAN communication area, and sending data related to the application service to the communication terminal through the set data transmission path.

A relay method according to a sixth exemplary aspect of the present invention includes setting a data transmission path with a base station when a wireless LAN communication area is formed by the access point in a mobile communication area formed by the base station, and a communication terminal that receives an application service from an application server through the base station has moved, in the mobile communication area, from outside of the wireless LAN communication area to inside of the wireless LAN communication area, and relaying data related to the application service and transmitted between the communication terminal and the base station by using the data transmission path.

A program according to a seventh exemplary aspect of the present invention causes a computer to execute setting a data transmission path with an access point when a wireless LAN communication area is formed by the access point in a mobile communication area formed by the base station, and a communication terminal that receives an application service from an application server through the base station has moved, in the mobile communication area, from outside of the wireless LAN communication area to inside of the wireless LAN communication area, and sending data related to the application service to the communication terminal through the set data transmission path.

### Advantageous Effects of Invention

According to the exemplary aspects of the present invention described above, it is possible to provide a communication system, a base station, an access point, a terminal, a communication method, a relay method and a program that can continuously receive services provided in a mobile network even when a communication terminal connects to a wireless LAN communication system in a mobile communication area in the environment where wireless LAN communication areas are scattered in the mobile communication area.

### Brief Description of Drawings

Fig. 1 is a block diagram of a communication system according to a first exemplary embodiment.
Fig. 2 is a block diagram of a communication system according to a second exemplary embodiment.
Fig. 3 is a block diagram of an eNB according to the second exemplary embodiment.
Fig. 4 is a block diagram of a UE according to the second exemplary embodiment.
Fig. 5 is a block diagram of an AP according to the second exemplary embodiment.
Fig. 6 is a block diagram of a TWAP according to the second exemplary embodiment.
Fig. 7 is a view showing a flow of a handover process of a UE according to the second exemplary embodiment.
Fig. 8 is a view showing a flow of a handover process of a UE according to the second exemplary embodiment.
Fig. 9 is a view showing a flow of a handover process of a UE according to a third exemplary embodiment.
Fig. 10 is a view showing a flow of a handover process of a UE according to a fourth exemplary embodiment.
Fig.11 is a view showing a flow of a handover process of a UE according to a fifth exemplary embodiment.
Fig. 12 is a view showing a flow of a handover process of a UE according to the fifth exemplary embodiment.

### Description of Embodiments

### (First Exemplary Embodiment)

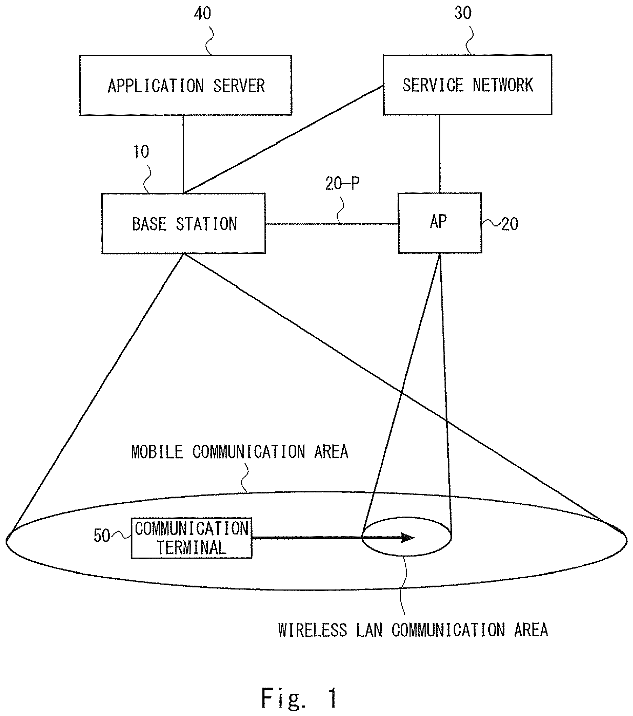

Exemplary embodiments of the present invention are described hereinafter with reference to the drawings. First, a configuration example of a communication system according to a first exemplary embodiment of the present invention is described hereinafter with reference to Fig. 1. The communication system in Fig. 1 includes a base station 10, an access point (Access Point:AP) 20 for wireless LAN, a service network 30, an application server 40 and a communication terminal 50.

The base station 10 forms a mobile communication area. The mobile communication area is a communication area that is made up of cells or sectors. The communication terminal 50 that is located in the mobile communication area formed by the base station 10 may communicate with the base station 10 by using, for example, LTE (Long Term Evolution), which is a wireless communication standard specified by 3GPP (3rd Generation Partnership Project).

The access point 20 forms a wireless LAN communication area in a mobile communication area. The communication terminal 50 that is located in the wireless LAN communication area communicates with the access point 20 by using wireless LAN communication, which is a wireless communication standard specified by IEEE (The Institute of Electrical and Electronics Engineers) 802 or the like. The wireless LAN communication area is formed to overlap a certain area in the mobile communication area. Although Fig. 1 shows that one wireless LAN communication area is formed in a mobile communication area, a plurality of wireless LAN communication areas may be formed in a mobile communication area. The access point 20 may have the function of managing a plurality of access points.

The application server 40 provides the communication terminal 50 located in the mobile communication area formed by the base station 10 with application services through the base station 10. For example, the application server 40 may provide the communication terminal 50 with a video distribution service or the like. The application server 40 can be regarded as an MEC server. On the other hand, the service network 30 is a network which the communication terminal 50 can access from the mobile communication area and the wireless LAN communication area. The service network 30 may be, for example, a PDN (Packet Data Network), the Internet or the like.

The communication terminal 50 may be a cell phone, a smartphone, a computer device having a communication function or the like. The communication terminal 50 has the function of communicating with the base station 10 and the access point 20.

An operation in the case where the communication terminal 50 has moved, in the mobile communication area, from the outside of the wireless LAN communication area to the inside of the wireless LAN communication area is described hereinafter. In this case, the access point 20 sets a data transmission path 20-P between the access point 20 and the base station 10. As a result of setting the data transmission path 20-P between the access point 20 and the base station 10, the base station 10 sends, to the access point 20, data addressed to the communication terminal 50. Note that the data transmission path 20-P may be a logical connection, a physical connection, or a wireless connection. An X2 interface, which is an inter-base-station interface defined by the 3GPP standards, may be applied to the data transmission path 20-P. Further, the access point 20 sends, to the base station 10, data sent from the communication terminal 50. The access point 20 communicates with the application server 40 through the base station 10. Thus, the access point 20 provides the communication terminal 50 with application services through the base station 10 and the access point 20.

As described above, the access point 20 can set the data transmission path 20-P between the access point 20 and the base station 10 which the communication terminal 50 has been communicated with. Therefore, the communication terminal 50 can communicate with the base station 10 through the access point 20 even when it has moved from the outside of the wireless LAN communication area to the inside of the wireless LAN communication area in the mobile communication area. Thus, even when the communication terminal 50 has moved into the wireless LAN communication area in the state of receiving a service with utilization of the application server 40 outside the wireless LAN communication area, the communication terminal 50 can continuously receive the application service with utilization of the application server 40.

### (Second Exemplary Embodiment)

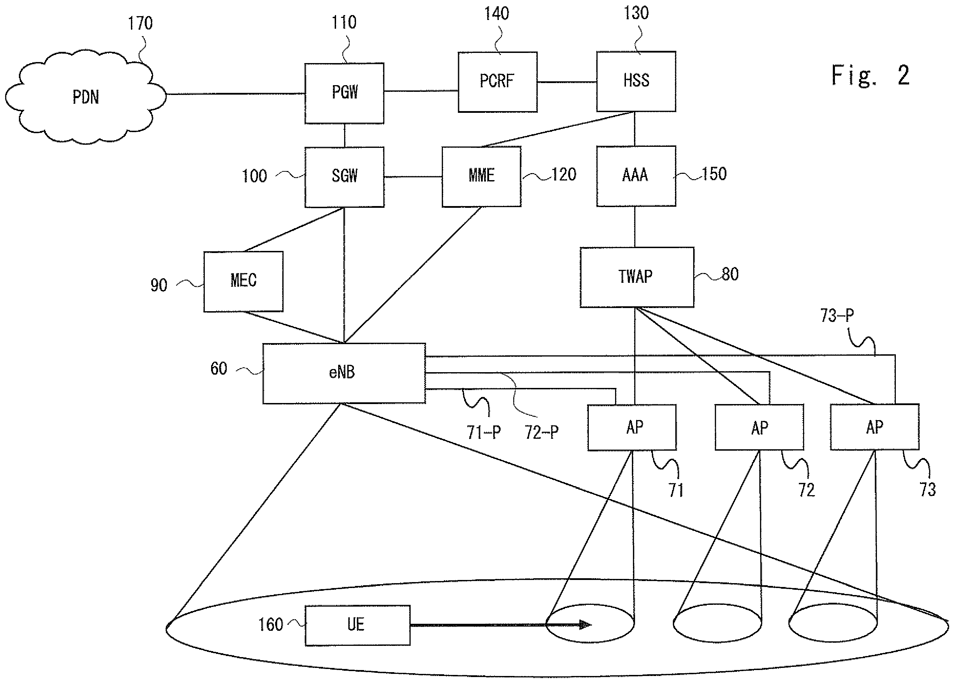

A configuration example of a communication system according to a second exemplary embodiment of the present invention is described hereinafter with reference to Fig. 2. The communication system in Fig. 2 is composed of node apparatuses whose operation is defined by the 3GPP. The communication system in Fig. 2 includes an eNB (evolved NodeB) 60, APs (Access Points) 71 to 73, a TWAP (Trusted WLAN AAA Proxy) 80 an MEC 90, an SGW (Serving Gateway) 100, a PGW (Packet Data Network Gateway) 110, an MME (Mobility Management Entity) 120, an HSS (Home Subscriber Server) 130, a PCRF (Policy and Charging Rules Function) 140, an AAA (Authentication Authorization Accounting) 150, a UE (User Equipment) 160, and a PDN (Packet Data Network) 170.

The eNB 60 corresponds to the base station 10 in Fig. 1. The APs 71 to 73 correspond to the access point 20 in Fig. 1. The MEC 90 corresponds to the application server 40 in Fig. 1. The UE 160 corresponds to the communication terminal 50 in Fig. 1.

The eNB 60 is a base station that can use the LTE defined by the 3GPP as a wireless communication scheme. The MME 120 performs call processing control for the UE 160. The UE 160 is located in a mobile communication area formed by the eNB 60. A control message that is sent in call processing control may be referred to as C-Plane (Control Plane) data. The SGW 100 and the PGW 110 are apparatuses that send user data related to the UE 160. The user data may be referred to as U-Plane (User Plane) data.

The HSS 130 is a server apparatus that stores subscriber data related to subscribers who have a subscription contract with a mobile carrier. The PCRF 140 is an apparatus that controls charging, QoS (Quality of Service) policies or the like in a mobile network. The PDN 170 is a network which is different from a mobile network that is managed by a mobile carrier. The PDN 170 may be a network that is managed by another mobile carrier, or the Internet.

Each of the APs 71 to 73 forms a wireless LAN communication area. Further, when the UE 160 has moved into a wireless LAN communication area, each of the APs 71 to 73 sets a data transmission path between the AP and the eNB 60 which the UE 16 has been communicated with. To be specific, a data transmission path 71-P is set between the AP 71 and the eNB 60, a data transmission path 72-P is set between the AP 72 and the eNB 60, and a data transmission path 73-P is set between the AP 73 and the eNB 60.

The TWAP 80 performs authentication or the like of the UE 160 located in the wireless LAN communication areas formed by the APs 71 to 73 by use of the AAA 150.

The UE 160 is a general term for mobile communication terminals, such as a cell phone terminal and a smartphone, used in the 3GPP.

Fig. 2 shows that the wireless LAN communication areas formed by the AP 71, the AP 72 and the AP 73 are included in the mobile communication area formed by the eNB 60. Therefore, there are cases where the UE 160 enters the wireless LAN communication area as it moves in the mobile communication area. In some cases, the UE 160 passes through the mobile communication area. In other words, when the UE 160 moves in the mobile communication area, it moves across the mobile communication area in some cases.

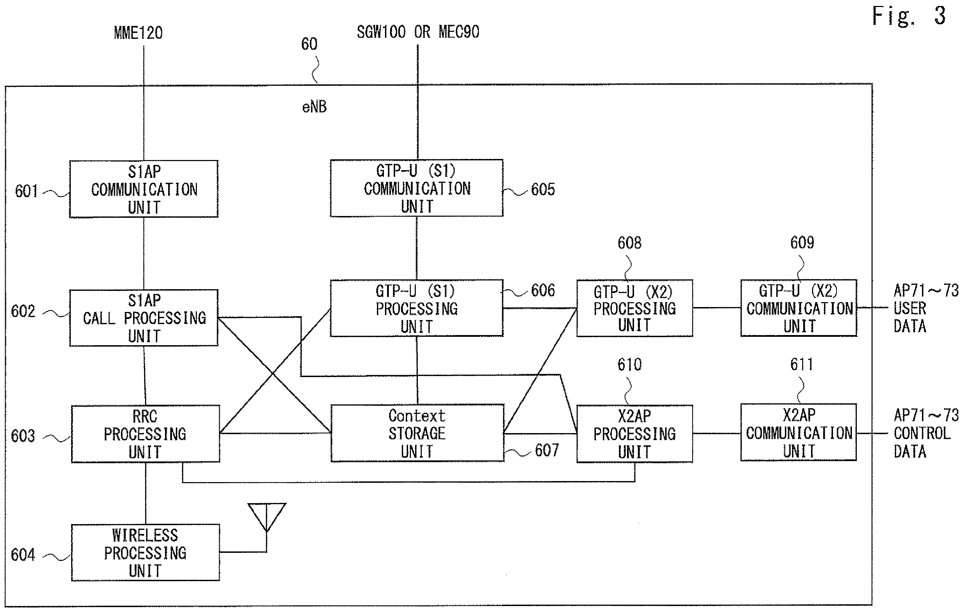

A configuration example of the eNB 60 according to the second exemplary embodiment of the present invention is described hereinafter with reference to Fig. 3. The eNB 60 includes an S1AP communication unit 601, an S1AP call processing unit 602, an RRC (Radio Resource Control) processing unit 603, a wireless processing unit 604, a GTP (General Packet Radio Service Tunneling Protocol)-U (S1) communication unit 605, a GTP-U (S1) processing unit 606, a Context storage unit 607, a GTP-U (X2) processing unit 608, a GTP-U (X2) communication unit 609, an X2AP processing unit 610, and an X2AP communication unit 611.

The eNB 60 may be a computer apparatus that operates by running, on a processor, a program stored in a memory. Further, each element of the eNB 60 may be software, a module or the like whose processing is executed by running, on a processor, a program stored in a memory. Alternatively, each element of the eNB 60 may be configured using a circuit.

The S1AP communication unit 601 is used as an interface when communicating with the MME 120. The S1AP call processing unit 602 performs call processing with the MME 120 by using information stored in the Context storage unit 607.

The S1AP call processing unit 602 sends and receives a message related to call processing to and from the MME 120 through the S1AP communication unit 601. Further, the S1AP call processing unit 602 selects an MME with which call processing is to be performed by using information stored in the Context storage unit 607.

The RRC (Radio Resource Control) processing unit 603 performs processing related to an RRC protocol that is used with the UE 160. For example, the RRC processing unit 603 may perform processing to manage a connection state with the UE 160. The wireless processing unit 604 is used as an interface when wirelessly communicating with the UE 160.

The GTP-U (S1) communication unit 605 is used as an interface when communicating with the MEC 90 or the SGW 100. The GTP-U (S1) processing unit 606 sends and receives user data to and from the MEC 90 or the SGW 100 through the GTP-U (S1) communication unit 605.

The Context storage unit 607 stores information of an MME to which a connection is to be made when performing call processing for the UE 160 which is sent from the MME 120 or the like. Further, the Context storage unit 607 may have information on connection to the APs 71 to 73 which is required to establish an X2 connection with the APs 71 to 73 or the like. The information on connection to the APs 71 to 73 may be IP addresses of the APs 71 to 73 or the like, for example.

The GTP-U (X2) communication unit 609 is used as an interface when communicating with the APs 71 to 73. The GTP-U (X2) processing unit 608 sends and receives user data to and from the APs 71 to 73 through the GTP-U (X2) communication unit 609.

The X2AP communication unit 611 is used as an interface when communicating with the APs 71 to 73. The X2AP processing unit 610 sends and receives control data to and from the APs 71 to 73 through the X2AP communication unit 611.

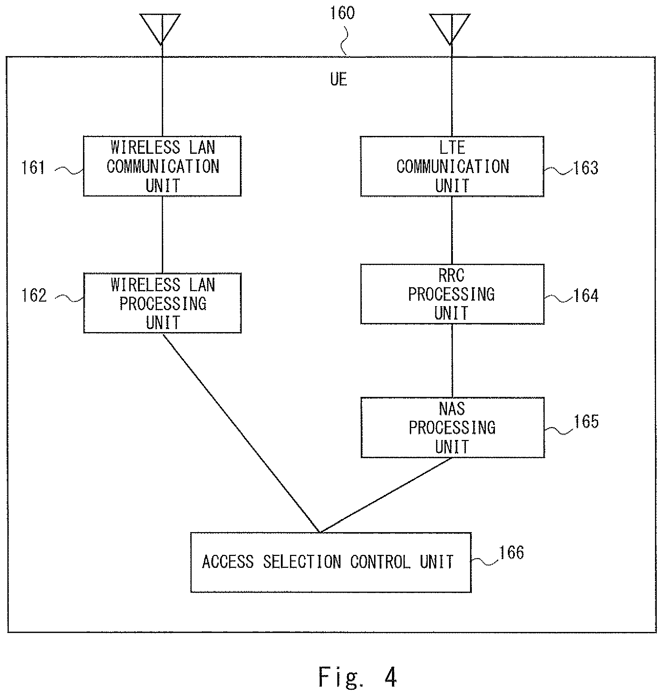

A configuration example of the UE 160 according to the second exemplary embodiment of the present invention is described hereinafter with reference to Fig. 4. The UE 160 includes a wireless LAN communication unit 161, a wireless LAN processing unit 162, an LTE communication unit 163, an RRC processing unit 164, an NAS (Non Access Stratum) processing unit 165, and an access selection control unit 166.

The wireless LAN communication unit 161 is used as an interface when communicating with the APs 71 to 73. The wireless LAN processing unit 162 sends and receives user data to and from the APs 71 to 73 through the wireless LAN communication unit 161.

The LTE communication unit 163 is used as an interface when communicating with the eNB 60. The RRC processing unit 164 performs communication using an RRC protocol with the eNB 60. The RRC processing unit 164 performs the communication using the RRC protocol through the LTE communication unit 163. The NAS processing unit 165 performs processing related to an NAS message that is used in communication with the MME 120. The NAS processing unit 165 sends the NAS message to the eNB 60 through the LTE communication unit 163.

The access selection control unit 166 selects whether to communicate with the eNB 60 or communicate with any of the APs 71 to 73 in accordance with an instruction message sent from the eNB 60 or the APs 71 to 73 and the radio field intensity of LTE and wireless LAN. When the access selection control unit 166 selects to communicate with any of the APs 71 to 73, it instructs the wireless LAN processing unit 162 to perform communication processing. On the other hand, when the access selection control unit 166 selects to communicate with the eNB 60, it instructs the RRC processing unit 164 and the NAS processing unit 165 to perform communication processing.

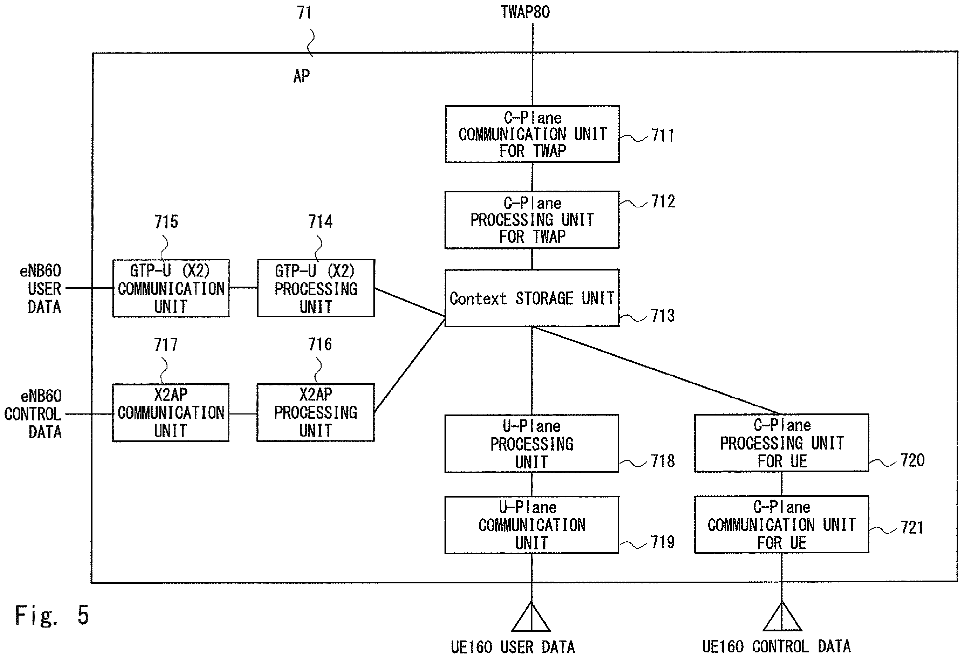

A configuration example of the AP 71 according to the second exemplary embodiment of the present invention is described hereinafter with reference to Fig. 5. The AP 72 and the AP 73 have the same configuration as the AP 71 and therefore the detailed description thereof is omitted. The AP 71 includes a C-Plane communication unit 711 for TWAP, a C-Plane processing unit 712 for TWAP, a Context storage unit 713, a GTP-U (X2) processing unit 714, a GTP-U (X2) communication unit 715, an X2AP processing unit 716, an X2AP communication unit 717, a U-Plane processing unit 718, a U-Plane communication unit 719, a C-Plane processing unit 720 for UE, and a C-Plane communication unit 721 for UE.

The Context storage unit 713 stores information about an eNB that is selected by the AP 71 to be connected to in communication related to the UE 160.

The C-Plane communication unit 711 for TWAP is used as an interface when communicating with the TWAP 80. The C-Plane processing unit 712 for TWAP sends and receives control data to and from the TWAP 80 through the C-Plane communication unit 711 for TWAP. For example, the C-Plane processing unit 712 for TWAP may send data for performing authentication on the UE 160 to the TWAP 80.

The GTP-U (X2) communication unit 715 is used as an interface when communicating with the eNB 60. The GTP-U (X2) processing unit 714 sends and receives user data to and from the eNB 60 through the GTP-U (X2) communication unit 715.

The X2AP communication unit 717 is used as an interface when communicating with the eNB 60. The X2AP processing unit 716 sends and receives control data to and from the eNB 60 through the X2AP communication unit 717 in order to set a data transmission path with the eNB 60.

For example, in the case where the UE 160 moves into the wireless LAN communication area formed by the AP 71 and receives a serving with utilization of the MEC 90 through the eNB 60, the AP 71 communicates with the eNB 60 through the GTP-U (X2) communication unit 715 and the X2AP communication unit 717.

The U-Plane communication unit 719 is used as an interface when communicating with the UE 160. For example, the U-Plane communication unit 719 wirelessly communicates with the UE 160. The U-Plane processing unit 718 sends and receives user data to and from the UE 160 through the U-Plane communication unit 719.

The C-Plane communication unit 721 for UE is used as an interface when communicating with the UE 160. For example, the C-Plane communication unit 721 for UE wirelessly communicates with the UE 160. The C-Plane processing unit 720 for UE sends and receives control data to and from the UE 160 through the C-Plane communication unit 721 for UE.

Although the C-Plane communication unit 721 for UE and the U-Plane communication unit 719 are different functional blocks or different elements in the example of Fig. 5, the C-Plane communication unit 721 for UE and the U-Plane communication unit 719 may be one functional block or one element. Specifically, the U-Plane processing unit 718 and the C-Plane processing unit 720 for UE may send and receive data to and from the UE 160 through one common communication unit.

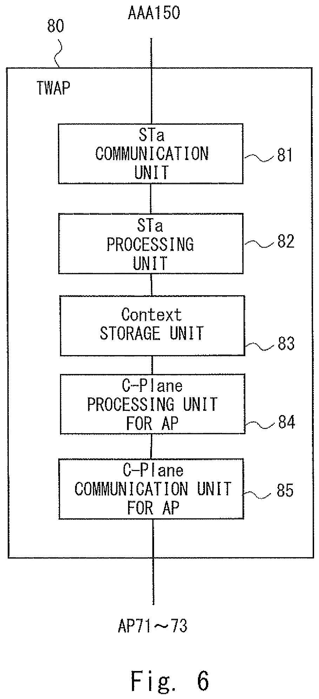

A configuration example of the TWAP 80 is described hereinafter with reference to Fig. 6. The TWAP 80 includes an STa communication unit 81, an STa processing unit 82, a Context storage unit 83, a C-Plane processing unit 84 for AP and a C-Plane communication unit 85 for AP.

The STa communication unit 81 is used as an interface when communicating with the AAA 150. The STa processing unit 82 sends and receives data for performing authentication to and from the AAA 150 through the STa communication unit 81.

The Context storage unit 83 stores information about the AAA 150 to perform authentication with the STa processing unit 82. Further, the Context storage unit 83 collaborates with the Context storage unit 713 of the APs 71 to 73 and share information about a path for sending data related to the UE 160 or information about an authentication result of the UE 160 performed in the AAA 150.

The C-Plane communication unit 85 for AP is used as an interface when communicating with the APs 71 to 73. The C-Plane processing unit 84 for AP sends and receives control data to and from the APs 71 to 73 through the C-Plane communication unit 85 for AP.

For example, the C-Plane communication unit 85 for AP receives data required for performing authentication which is sent from the UE 160 through the AP 71. The data required for performing authentication may be identification information of the UE 160 or the like, for example. The C-Plane processing unit 724 for AP outputs data related to authentication which is received through the C-Plane communication unit 725 for AP to the Context storage unit 723. Further, the C-Plane processing unit 84 for AP sends information about a result of authentication of the UE 160 which is performed in the AAA 150 to the AP 71 through the C-Plane communication unit 85 for AP.

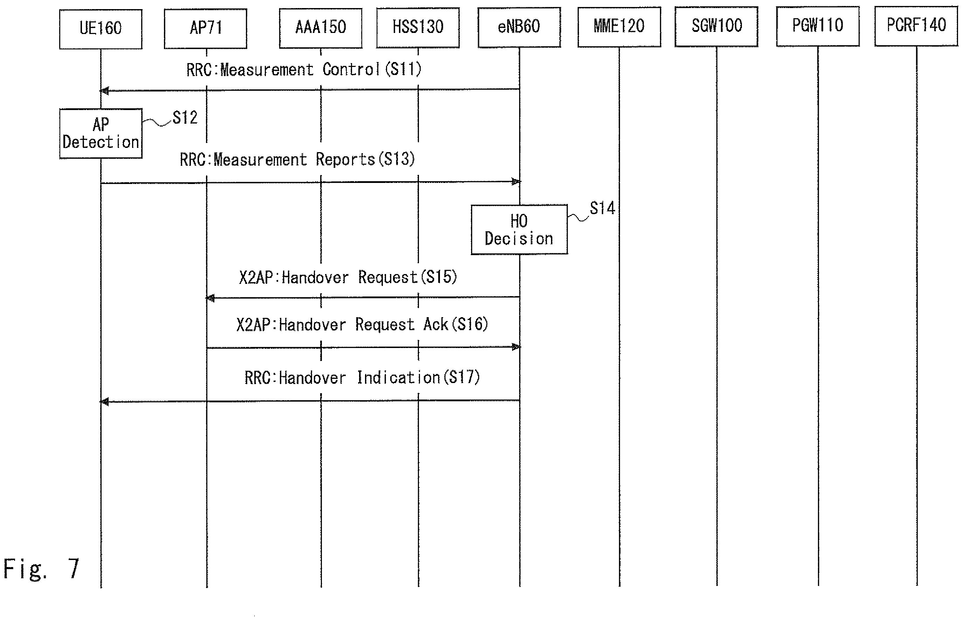

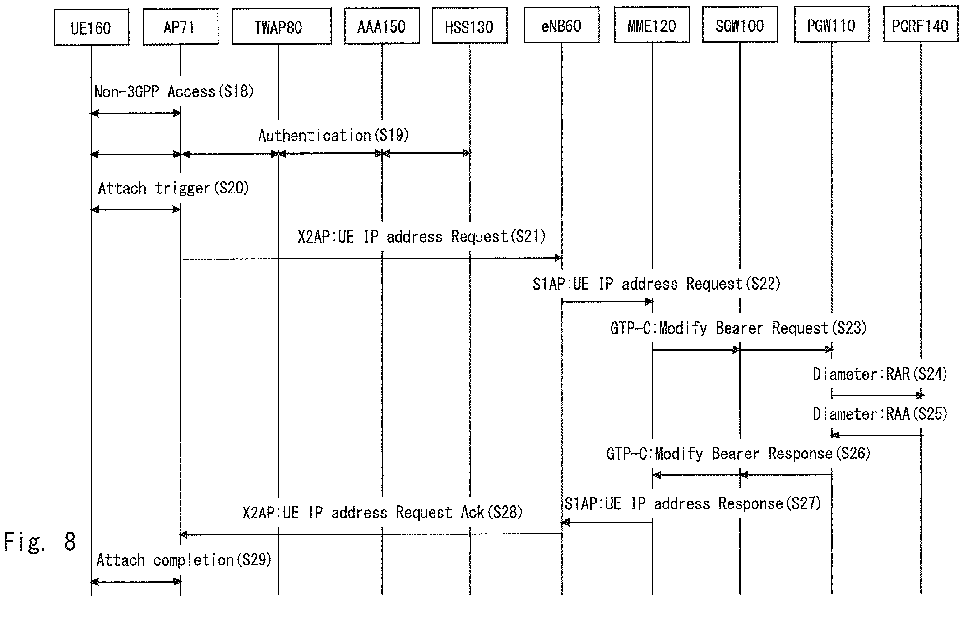

A flow of a handover process of the UE 160 according to the second exemplary embodiment of the present invention is described hereinafter with reference to Figs. 7 and 8. In Figs. 7 and 8, an operation in the case where the UE 160 moves, in the mobile communication area, from the outside of the wireless LAN communication area formed by the AP 71 to the inside of the wireless LAN communication area formed by the AP 71 is described.

First, the eNB 60 sends an RRC:Measurement Control message to the UE 160 in order to give an instruction to measure radio strength (S11). The radio strength may be referred to as signal strength, radio field strength, electric field strength or the like, for example. The eNB 60 sets the RRC:Measurement Control message so as to instruct the UE 160 to measure the radio strength of a radio signal that is sent by an eNB located in the vicinity of the UE 160 via LTE communication and the radio strength of a radio signal that is sent by an AP via wireless LAN communication.

Next, the UE 160 detects a radio signal that is sent from the AP 71 (S12). The UE 160 then sends, to the eNB 60, an RRC:Measurement Report message to which information that associates the radio strength of the detected radio signal with identification information of a base station or the AP 71 is set (S13). For example, the UE 160 may set, to the RRC:Measurement Report message, the radio strength of the radio signal sent from the AP 71 detected in Step S12 and SSID (Service set identification) or BSSID (Basic service set identification) broadcasted from the AP 71.

The UE 160 may be controlled, when a plurality of APs are detected in Step S12, not to send information about all of the detected APs to the eNB 60. For example, the UE 160 may set, to the RRC:Measurement Report message, only information about the AP that is specified by the eNB 60. For example, the eNB 60 may deliver, as broadcast information or the like, information about the AP that can establish a connection. When the UE 160 detects radio signals related to a plurality of APs, it may send, to the eNB 60, information about only the AP that is specified by broadcast information or the like delivered from the eNB 60.

Then, the eNB 60 determines to hand over the UE 160 to the AP 71 based on the information set to the RRC:Measurement Report message (S14). The eNB 60 determines to hand over the UE 160 to the AP 71 in the case where it is possible to establish a connection with the AP 71. In other words, in the case where it is not possible to establish a connection with the AP 71, the eNB 60 may refrain from handing over the UE 160 to the AP 71.

After that, the eNB 60 sends an X2AP:Handover Request message to the AP 71 based on information required for connecting to the AP 71 which is stored in the Context storage unit 607 (S15). When the UE 160 connects to the AP 71, the AP 71 needs to determine whether there is correspondence between an X2 connection that is set between the AP 71 and the eNB 60 and the UE 160. To this end, the eNB 60 sets, to the X2AP:Handover Request message, identification information of the X2 connection that is set for handover of the UE 160. An interface between the AP 71 and the eNB 60 is specified as an X2 interface by the 3GPP. The identification information of the X2 connection may be path information that is set between the AP 71 and the eNB 60 through the X2 interface.

Further, the eNB 60 sets, to the X2AP:Handover Request message, TEID (Tunnel Endpoint Identifier) (which is referred to hereinafter as eNB UL TEID) of the eNB 60 to be specified when the AP 71 sends data to the eNB 60.

Furthermore, the eNB 60 sets, to the X2AP:Handover Request message, security information for generating key information to be used for encryption, decryption or the like, for example. The security information may be contained in AS Security Information in the X2AP:Handover Request message, for example.

The AP 71 may perform secrecy processing specified by IEEE802.1x with use of the security information sent from the eNB 60 or may perform secrecy processing specified by IEEE802.1x without use of the security information. Further, when the UE 160 has moved out of the wireless LAN communication area in the mobile communication area, the AP 71 sends, to the eNB 60, the security information set to the X2AP:Handover Request message.

Then, as a response to the X2AP:Handover Request message, the AP 71 sends an X2AP:Handover Request Ack message to the eNB 60 (S16). The AP 71 sets, to the X2AP:Handover Request Ack message, TEID (which is referred to hereinafter as TWAN DL TEID) of the AP 71 to be specified when the eNB 60 sends data to the AP 71. As a result that the AP 71 sends the X2AP:Handover Request Ack message to the eNB 60, the X2 connection is established between the AP 71 and the eNB 60.

After that, the eNB 60 sends an RRC:Handover Indication message to the UE 160 in order to indicate the start of a connection to the AP 71 (S17). The eNB 60 may set identification information of the X2 connection to the RRC:Handover Indication message.

Proceeding to Fig. 8, the UE 160 starts a connection process (Non-3GPP Access) with the AP 71 (S18). Then, authentication is performed between the UE 160 and the AP 71, between the AP 71 and the TWAP 80, between the TWAP 80 and the AAA 150, and between the AAA 150 and the HSS 130 (S19).

After that, the UE 160 starts an Attach process (Attach trigger) with the AP 71 (S20). The UE 160 may send the identification information of the X2 connection acquired by the RRC:Handover Indication message in Step S17 to the AP 71 sometime between Steps S18 to S20 in order to indicate that the UE 160 has moved from the mobile communication area into the wireless LAN communication area formed by the AP 71.

For example, the UE 160 may set the identification information of the X2 connection to an EAP (Extensible Authentication Protocol) payload that is sent at the time of authentication in Step S19. Alternatively, the UE 160 may set the identification information of the X2 connection to a DHCP (Dynamic Host Configuration Protocol) message that is sent for acquiring an IP address.

Then, when the AP 71 determines that the UE 160 has moved from the mobile communication area formed by the eNB 60 to the wireless LAN communication area formed by the AP 71, it sends an X2AP:UE IP address Request message to the eNB 60 (S21).

The AP 71 sets information indicating wireless LAN as RAT (Radio Access Technology) Type, and further SSID and BSSID, to the X2AP:UE IP address Request message. Further, the AP 71 may set information indicating wireless LAN as RAT Type by use of ECGI (E-UTRAN Cell Global ID). The ECGI is made up of PLMN (Public Land Mobile Network) ID and ECI (E-UTRAN Cell Identity). Further, the ECI is made up of eNB ID and Cell ID.

Then, the eNB 60 sends an S1AP:UE IP address Request message to the MME 120 (S22). The eNB 60 sets information indicating wireless LAN as RAT Type, and further SSID and BSSID, to the S1AP:UE IP address Request message. Further, the eNB 60 may set information indicating wireless LAN as RAT Type by use of ECGI.

The MME 120 sends a GTP-C:Modify Bearer Request message to the SGW 100, and further the SGW 100 sends the GTP-C:Modify Bearer Request message to the PGW 110 (S23).

The MME 120 and the SGW 100 set information indicating wireless LAN as RAT Type, and further SSID and BSSID, to the GTP-C:Modify Bearer Request message. Further, the MME 120 and the SGW 100 may set RAT Type, SSID and BSSID by using or extending ULI (User Location Information) IE.

Then, the PGW 110 sends a Diameter:RAR (Re-Authentication Request) message to the PCRF 140 (S24). When changing policies, charging rules or the like with a change in RAT Type into wireless LAN, the PGW 110 sends the Diameter:RAR message to the PCRF 140. Therefore, when it is not necessary to change policies, charging rules or the like with a change in RAT Type into wireless LAN, the PGW 110 may refrain from sending the Diameter:RAR message to the PCRF 140.

As a response to the Diameter:RAR message, the PCRF 140 sends a Diameter:RAA(Re-Authentication Answer) message to the PGW 110 (S25).
Then, as a response to the GTP-C:Modify Bearer Request message, the PGW 110 and the SGW 100 send a GTP-C:Modify Bearer Response message to the SGW 100 and the MME 120 (S26).

In the GTP-C:Modify Bearer Response message, an IP address to be assigned to the UE 160 is set to PAA (PDN Address Allocation) IE. The IP address to be assigned to the UE 160 is the same as the IP address that is used when the UE 160 communicates with the eNB 60 outside the wireless LAN communication area in the mobile communication area formed by the eNB 60.

Then, as a response to the S1AP:UE IP address Request message, the MME 120 sends an S1AP:UE IP address Response message to the eNB 60 (S27). The MME 120 sets, to the S1AP:UE IP address Response message, the IP address of the UE 160 that is set to the GTP-C:Modify Bearer Response message.

Then, as a response to the X2AP: UE IP address Request message, the eNB 60 sends an X2AP: UE IP address Request Ack message to the AP 71 (S28). The eNB 60 sets, to the X2AP UE IP address Request Ack message, the IP address of the UE 160 that is set to the S1AP: UE IP address Response message. The AP 71 receives the X2AP: UE IP address Request Ack message and performs processing to complete the Attach process with the UE 160 (Attach completion) (S29). When completing the Attach process, the eNB 60 notifies the UE 160 of the IP address that is assigned to the UE 160.

As described above, by use of the communication system according to the second exemplary embodiment of the present invention, when the UE 160 is handed over from the mobile communication area formed by the eNB 60 to the wireless LAN communication area formed by the AP 71, a data transmission path is set between the eNB 60 and the AP 71. Therefore, the UE 160 can continue to communicate with the eNB 60 even after it is handed over to the wireless LAN communication area. The UE 160 can thereby continuously receive a service provided by the MEC 90 through the eNB 60.

Further, the processing where the PGW 110 allocates, as the IP address to be used by the UE 160 in the wireless LAN communication area, the IP address that has been used by the UE 160 in the mobile communication area is described in Fig. 8. Instead, the IP address may be allocated by the HSS. Further, the AP 71 may receive, from the UE 160, information about the IP address that has been used in the mobile communication area, or may receive, from the eNB 60, information about the IP address that has been used by the UE 160 in the mobile communication area.

Further, in Fig. 7, after Step S14, the eNB 60 may autonomously search for the AP 71. Specifically, in the case where the eNB 60 does not have information required for connecting to the AP 71, the eNB 60 autonomously searches for the AP 71. For example, a new interface may be defined between the MME 120 and the AP 71, and the eNB 60 may acquire information required for connecting to the AP 71, which is the IP address of the AP 71, for example, through the newly defined interface. Alternatively, the HSS 130 may store information required for connecting to the AP 71 to the AP 73, and the eNB 60 may acquire the information required for connecting to the AP 71 from the HSS 130.

### (Third Exemplary Embodiment)

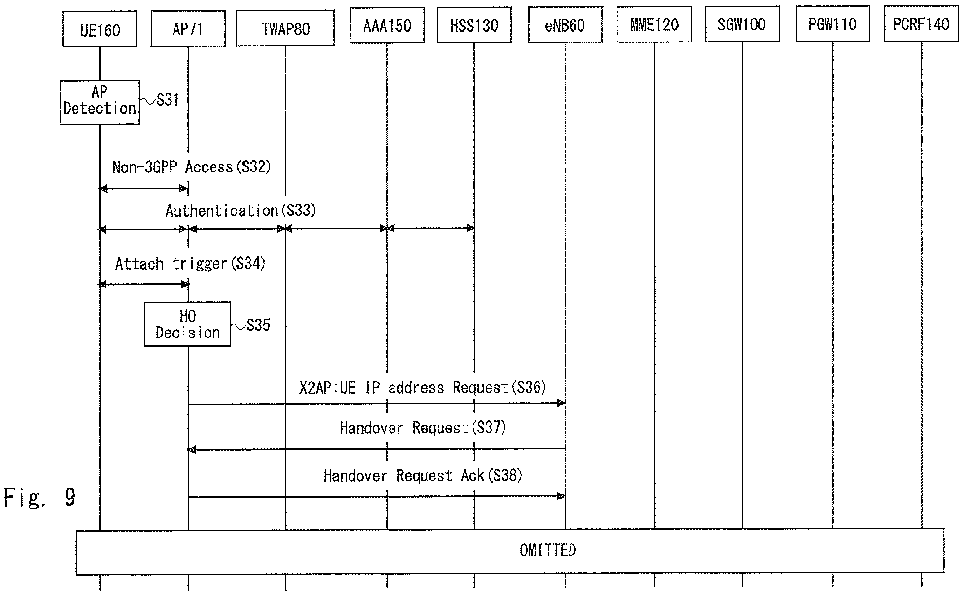

A flow of a handover process of the UE 160 according to a third exemplary embodiment of the present invention is described hereinafter with reference to Fig. 9. In this figure, an operation in the case where the UE 160 moves from the outside of the wireless LAN communication area formed by the AP 71 to the inside of the wireless LAN communication area formed by the AP 71 in the mobile communication area is described. First, the UE 160 detects a radio signal that is sent from the AP 71 (S31). The UE 160 then performs a connection process to the AP 71 in Steps S32 to S34 without receiving a message related to handover, like the RRC:Handover Indication message sent from the eNB 60 in Step S17 in Fig. 7. Steps S32 to S34 in Fig. 9 are the same as Steps S18 to S20 in Fig. 8, and the detailed description thereof is omitted.

Then, the AP 71 determines to hand over the UE 160 to the AP 71 (S35). In the case where it is not possible to establish a connection with the eNB 60, the AP 71 may disconnect a connection with the UE 160 and rejects a connection with the UE 160. In other words, in the case where it is not possible to establish a connection with the eNB 60, the AP 71 may switch a connection of the UE 160 back to the eNB 60. Alternatively, in the case where it is not possible to establish a connection with the eNB 60, the AP 71 may set a connection with the PGW 110.

Then, the AP 71 sends an X2AP:UE IP address Request message to the eNB 60, just like in Step S21 of Fig. 8 (S36). Steps S37 to S38 are the same as Steps S15 and S16 in Fig. 7, and the detailed description thereof is omitted. Further, after Step S38, the processing of Steps S22 to S29 in Fig. 8 is performed. In Fig. 9, the illustration of the processing after Step S38 is omitted.

As described above, by use of the communication system according to the third exemplary embodiment of the present invention, the AP 71 can determine to perform handover of the UE 160. A data transmission path is thereby set between the eNB 60 and the AP 71 to the AP 73. Further, because the AP 71 makes the determination about performing handover, the processing load in the eNB 60 is reduced compared with that in the second exemplary embodiment.

Further, in Fig. 9, after Step S35, the AP 71 may autonomously search for the eNB 60. Specifically, in the case where the AP 71 does not have information required for connecting to the eNB 60, the AP 71 autonomously searches for the eNB 60. For example, a new interface may be defined between the MME 120 and the AP 71, and the AP 71 may acquire information required for connecting to the eNB 60, which is the IP address of the eNB 60, for example, through the newly defined interface. Alternatively, the HSS 130 may store information required for connecting to the eNB 60, and the AP 71 may acquire the information required for connecting to the eNB 60 from the HSS 130.

### (Fourth Exemplary Embodiment)

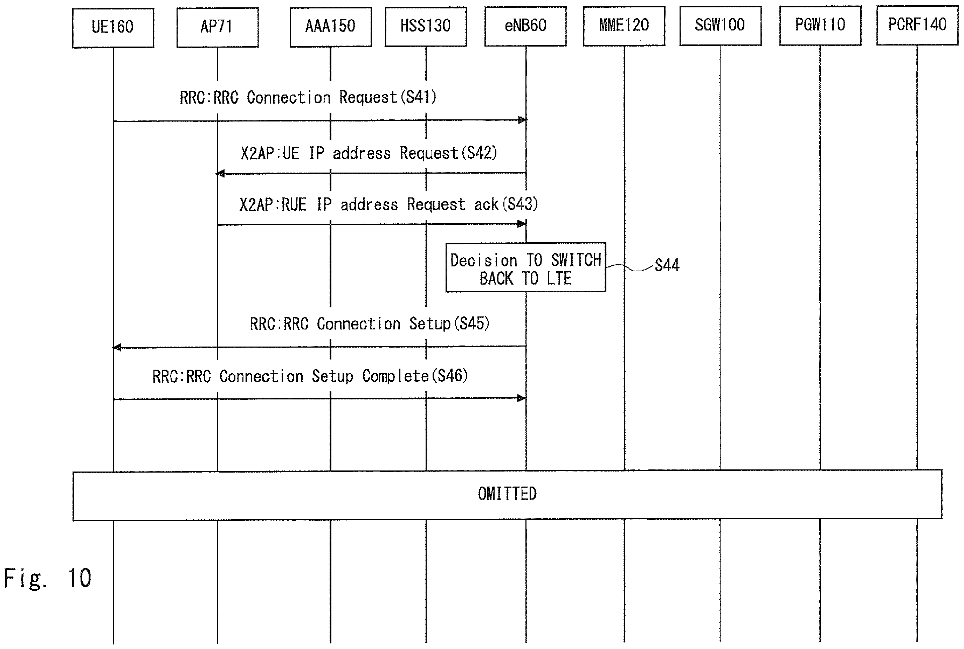

A flow of a handover process of the UE 160 according to a fourth exemplary embodiment of the present invention is described hereinafter with reference to Fig. 10. The handover process in Fig. 9 describes a flow of the process in the case where the UE 160 moves, in the mobile communication area, from the inside of the wireless LAN communication area formed by the AP 71 to the outside of the wireless LAN communication area formed by the AP 71. Further, in Fig. 9, it is assumed that an RRC connection between the UE 160 and the eNB 60 is released when the UE 160 has moved into the wireless LAN communication area formed by the AP 71.

When the strength of a radio signal sent from the AP 71 becomes lower than a predetermined threshold and the strength of a signal sent from the eNB 60 becomes higher than a predetermined threshold, the UE 160 sends an RRC:RRC Connection Request message to the eNB 60 (S41).

Then, in order to connect the UE 160 to the eNB 60, the eNB 60 sends an X2AP:UE IP address Request message to the AP 71 (S42). As a response to the X2AP:UE IP address Request message, the AP 71 sends an X2AP: UE IP address Request Ack message to the eNB 60 (S43). In the case where security information is received from the eNB 60 when the UE 160 is handed over to the AP 71, the AP 71 may set the received security information to the X2AP: UE IP address Request Ack message. Then, the eNB 60 determines to switch a connection of the UE 160 from the AP 71 to the eNB 60 (S44).

Then, in order to set an RRC connection with the UE 160, the eNB 60 sends an RRC:RRC Connection Setup message to the UE 160 (S45). As a response to the RRC:RRC Connection Setup message, the UE 160 sends an RRC:RRC Connection Setup Complete message to the eNB 60 (S46).

After Step S46, the processing of Steps S22 to S29 in Fig. 8 is performed. In Fig. 10, the illustration of the processing after Step S46 is omitted.

As described above, by use of the communication system according to the fourth exemplary embodiment of the present invention, the UE 160 can be handed over from the AP 71 to the eNB 60. The UE 160 can thereby receive a service that has been received from the MEC 90 through the AP 71 also after the handover through the eNB 60.

### (Fifth Exemplary Embodiment)

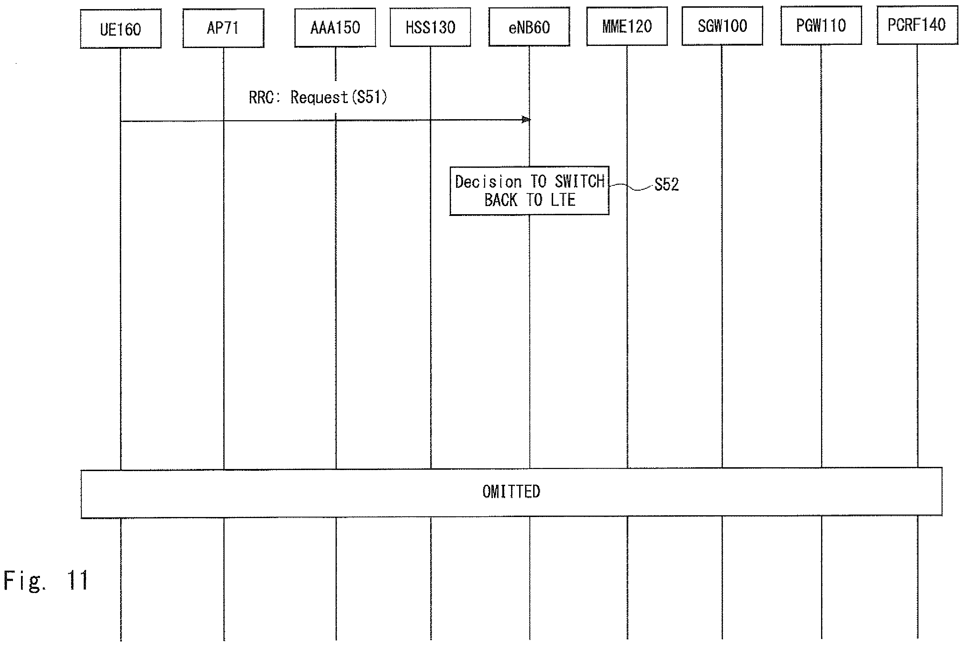

A flow of a handover process of the UE 160 according to a fifth exemplary embodiment of the present invention is described hereinafter with reference to Fig. 11. The handover process in Fig. 11 describes a flow of the process in the case where the UE 160 moves, in the mobile communication area, from the inside of the wireless LAN communication area formed by the AP 71 to the outside of the wireless LAN communication area formed by the AP 71. Further, in Fig. 11, it is assumed that an RRC connection between the UE 160 and the eNB 60 is maintained even when the UE 160 has moved into the wireless LAN communication area formed by the AP 71.

When the strength of a radio signal sent from the AP 71 becomes lower than a predetermined threshold and the strength of a signal sent from the eNB 60 becomes higher than a predetermined threshold, the UE 160 sends an arbitrary Request message using an RRC protocol to the eNB 60 (S51). For example, the UE 160 may send an RRC:Measurement Reports message to the eNB 60.

Then, the eNB 60 determines to switch a connection of the UE 160 from the AP 71 to the eNB 60 (S52). After Step S52, the processing of Steps S22 to S29 in Fig. 8 is performed. In Fig. 11, the illustration of the processing after Step S52 is omitted. Further, although the RRC:RRC Connection Setup message and the RRC:RRC Connection Setup Complete message are sent and received in Fig. 10, because the RRC connection between the UE 160 and the eNB 60 is maintained in Fig. 11, there is no need to send and receive the RRC:RRC Connection Setup message and the RRC:RRC Connection Setup Complete message.

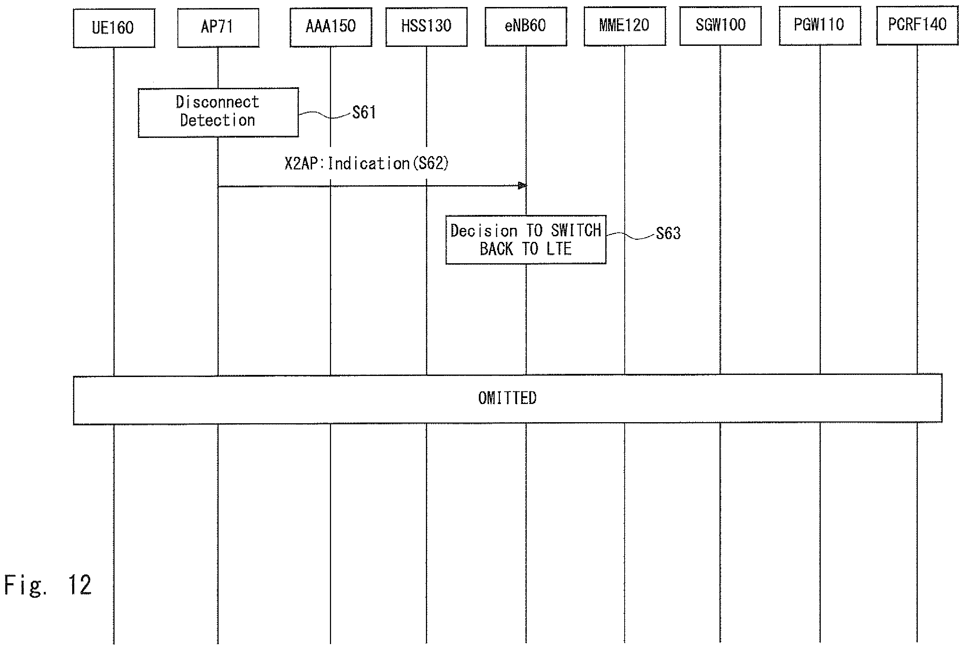

Another flow of a handover process of the UE 160 according to the fifth exemplary embodiment of the present invention, which is different from the process flow in Fig. 11, is described hereinafter with reference to Fig. 12. In Fig. 12, differently from Fig. 11, the AP 71 sends, to the eNB 60, a signal that serves as a trigger for a switch process in the eNB 60.

First, the AP 71 detects that a connection between the AP 71 and the UE 160 is disconnected since the UE 160 has moved to the outside of the wireless LAN communication area (S61). When the AP 71 detects that a connection between the AP 71 and the UE 160 is disconnected, the AP 71 sends an X2AP:Indication message to the eNB 60 (S62). Then, the
eNB 60 determines to switch a connection of the UE 160 from the AP 71 to the eNB 60 (S63). After Step S63, the processing of Steps S22 to S29 in Fig. 8 is performed. In Fig. 12, the illustration of the processing after Step S63 is omitted.

As described above, by use of the communication system according to the fourth exemplary embodiment of the present invention, the UE 160 can be handed over from the AP 71 to the eNB 60. The UE 160 can thereby receive a service that has been received from the MEC 90 through the AP 71 also after the handover through the eNB 60. Further, because communication is performed using the RRC connection that is maintained between the UE 160 and the eNB 60 in Figs. 11 and 12, the number of signals is reduced compared with that in the process of Fig. 10.

Although the present invention is described as a hardware configuration in the above exemplary embodiments, the present invention is not limited thereto. The present invention may be implemented by causing a CPU (Central Processing Unit) to execute a computer program to perform processing in the communication terminal 50 (e.g., the UE 160), the base station 10 (e.g., the eNB 60), the MME 120, and the access point 20 (e.g., the AP 71).

In the above example, the program can be stored and provided to the computer using any type of non-transitory computer readable medium. The non-transitory computer readable medium includes any type of tangible storage medium. Examples of the non-transitory computer readable medium include magnetic storage media (such as floppy disks, magnetic tapes, hard disk drives, etc.), optical magnetic storage media (e.g. magneto-optical disks), CD-ROM (Read Only Memory), CD-R , CD-R/W, DVD-ROM (Digital Versatile Disc Read Only Memory), DVD-R (DVD Recordable)), DVD-R DL (DVD-R Dual Layer)), DVD-RW (DVD ReWritable)), DVD-RAM), DVD+R), DVR+R DL), DVD+RW), BD-R (Blu-ray (registered trademark) Disc Recordable)), BD-RE (Blu-ray (registered trademark) Disc Rewritable)), BD-ROM), and semiconductor memories (such as mask ROM, PROM (Programmable ROM), EPROM (Erasable PROM), flash ROM, RAM (Random Access Memory), etc.). The program may be provided to a computer using any type of transitory computer readable medium. Examples of the transitory computer readable medium include electric signals, optical signals, and electromagnetic waves. The transitory computer readable medium can provide the program to a computer via a wired communication line such as an electric wire or optical fiber or a wireless communication line.

It should be noted that the present invention is not limited to the above-described exemplary embodiments and may be varied in many ways within the scope of the present invention.

The whole or part of the exemplary embodiments disclosed above can be described as, but not limited to, the following supplementary notes.

### (Supplementary note 1)

A communication system comprising:
a base station that forms a mobile communication area;
an access point that forms a wireless LAN communication area in a mobile communication area; and
an application server that provides application services to a communication terminal located in the mobile communication area through the base station, wherein
when the communication terminal has moved, in the mobile communication area, from outside of the wireless LAN communication area to inside of the wireless LAN communication area, the access point sets a data transmission path with the base station and relays data transmission between the base station and the communication terminal.

### (Supplementary note 2)

The communication system according to Supplementary note 1, wherein when the communication terminal has moved, in the mobile communication area, from outside of the wireless LAN communication area to inside of the wireless LAN communication area, the base station sends, to the access point, identification information indicating that the communication terminal has been communicated with the base station.

### (Supplementary note 3)

The communication system according to Supplementary note 1 or 2, wherein when the communication terminal has moved, in the mobile communication area, from outside of the wireless LAN communication area to inside of the wireless LAN communication area, the base station sends, to the communication terminal, a message indicating handover to an access point.

### (Supplementary note 4)

The communication system according to any one of Supplementary notes 1 to 3, wherein when the communication terminal has moved, in the mobile communication area, from outside of the wireless LAN communication area to inside of the wireless LAN communication area, the base station sends, to the access point, data addressed to the communication terminal.

### (Supplementary note 5)

The communication system according to any one of Supplementary notes 1 to 4, wherein when the communication terminal has moved, in the mobile communication area, from inside of the wireless LAN communication area to outside of the wireless LAN communication area, the base station sets a wireless channel with the communication terminal and communicates with the communication terminal.

### (Supplementary note 6)

The communication system according to Supplementary note 5, wherein when the communication terminal has moved, in the mobile communication area, from inside of the wireless LAN communication area to outside of the wireless LAN communication area, the base station sends, to the access point, a message indicating releasing a wireless channel between the communication terminal and the access point.

### (Supplementary note 7)

A base station comprising:
a communication means for setting a data transmission path with an access point when a wireless LAN communication area is formed by the access point in a mobile communication area formed by the base station, and a communication terminal that receives an application service from an application server through the base station has moved, in the mobile communication area, from outside of the wireless LAN communication area to inside of the wireless LAN communication area; and
a processing means for performing control to send data related to the application service to the communication terminal through the set data transmission path.

### (Supplementary note 8)

An access point comprising:
a communication means for forming a wireless LAN communication area in a mobile communication area formed by a base station, and setting a data transmission path with the base station when a communication terminal that receives an application service from an application server through the base station has moved, in the mobile communication area, from outside of the wireless LAN communication area to inside of the wireless LAN communication area; and
a processing means for relaying data related to the application service and transmitted between the communication terminal and the base station by using the data transmission path.

### (Supplementary note 9)

A terminal comprising:
a wireless LAN communication means for, when the terminal has moved, in a mobile communication area formed by a base station, from outside of a wireless LAN communication area formed by an access point to inside of the wireless LAN communication area, receiving, from the access point, an application service provided from an application server through a data transmission path set between the base station and the access point.

### (Supplementary note 10)

A communication method in a base station comprising:
setting a data transmission path with an access point when a wireless LAN communication area is formed by the access point in a mobile communication area formed by the base station, and a communication terminal that receives an application service from an application server through the base station has moved, in the mobile communication area, from outside of the wireless LAN communication area to inside of the wireless LAN communication area; and
sending data related to the application service to the communication terminal through the set data transmission path.

### (Supplementary note 11)

A relay method in an access point comprising:
setting a data transmission path with a base station when a wireless LAN communication area is formed by the access point in a mobile communication area formed by the base station, and a communication terminal that receives an application service from an application server through the base station has moved, in the mobile communication area, from outside of the wireless LAN communication area to inside of the wireless LAN communication area; and
relaying data related to the application service and transmitted between the communication terminal and the base station by using the data transmission path.

### (Supplementary note 12)

A non-transitory computer readable medium storing a program causing a computer to execute:
setting a data transmission path with an access point when a wireless LAN communication area is formed by the access point in a mobile communication area formed by the base station, and a communication terminal that receives an application service from an application server through the base station has moved, in the mobile communication area, from outside of the wireless LAN communication area to inside of the wireless LAN communication area; and
sending data related to the application service to the communication terminal through the set data transmission path.

### (Supplementary note 13)

A non-transitory computer readable medium storing a program causing a computer to execute:
setting a data transmission path with a base station when a wireless LAN communication area is formed by the access point in a mobile communication area formed by the base station, and a communication terminal that receives an application service from an application server through the base station has moved, in the mobile communication area, from outside of the wireless LAN communication area to inside of the wireless LAN communication area; and
relaying data related to the application service and transmitted between the communication terminal and the base station by using the data transmission path.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

This application is based upon and claims the benefit of priority from Japanese patent application No. 2015-091319 filed on April 28, 2015, the disclosure of which is incorporated herein in its entirety by reference.

### Reference Signs List

- 10: BASE STATION
- 20: ACCESS POINT
- 30: SERVICE NETWORK
- 40: APPLICATION SERVER
- 50: COMMUNICATION TERMINAL
- 60: eNB
- 71: AP
- 72: AP
- 73: AP
- 80: TWAP
- 81: STa COMMUNICATION UNIT
- 82: STa PROCESSING UNIT
- 83: CONTEXT STORAGE UNIT
- 84: C-PLANE PROCESSING UNIT FOR AP
- 85: C-PLANE COMMUNICATION UNIT FOR AP
- 90: MEC
- 100: SGW
- 110: PGW
- 120: MME
- 130: HSS
- 140: PCRF
- 150: AAA
- 160: UE
- 161: WIRELESS LAN COMMUNICATION UNIT
- 162: WIRELESS LAN PROCESSING UNIT
- 163: LTE COMMUNICATION UNIT
- 164: RRC PROCESSING UNIT
- 165: NAS PROCESSING UNIT
- 166: ACCESS SELECTION CONTROL UNIT
- 170: PDN
- 601: S1AP COMMUNICATION UNIT
- 602: S1AP CALL PROCESSING UNIT
- 603: RRC PROCESSING UNIT
- 604: WIRELESS PROCESSING UNIT
- 605: GTP-U(S1) COMMUNICATION UNIT
- 606: GTP-U(S1) PROCESSING UNIT
- 607: CONTEXT STORAGE UNIT
- 608: GTP-U(X2) PROCESSING UNIT
- 609: GTP-U (X2) COMMUNICATION UNIT
- 610: X2AP PROCESSING UNIT
- 611: X2AP COMMUNICATION UNIT
- 710: TWAG
- 711: C-PLANE COMMUNICATION UNIT FOR TWAP
- 712: C-PLANE CONTROL UNIT FOR TWAP
- 713: CONTEXT STORAGE UNIT
- 714: GTP-U(X2) PROCESSING UNIT
- 715: GTP-U (X2) COMMUNICATION UNIT
- 716: X2AP PROCESSING UNIT
- 717: X2AP COMMUNICATION UNIT
- 718: U-PLANE PROCESSING UNIT
- 719: U-PLANE COMMUNICATION UNIT
- 720: C-PLANE PROCESSING UNIT FOR UE
- 721: C-PLANE COMMUNICATION UNIT FOR UE

## Claims

1. A communication method for communicating user data related to a communication terminal, comprising:
setting an interface between a base station for mobile communication and a communication apparatus for wireless LAN (Local Area Network); and
transferring the user data from the base station for mobile communication to the communication apparatus for wireless LAN or from the communication apparatus for wireless LAN to the base station for mobile communication by using the interface.

2. The communication method according to Claim 1, wherein
the base station for mobile communication receives a Measurement Report message from the communication terminal,
the base station for mobile communication sends a Request message to the communication apparatus for wireless LAN,
the base station for mobile communication receives a Request Ack message from the communication apparatus for wireless LAN, and
a transmission path is set between the base station for mobile communication and the communication apparatus for wireless LAN.

3. The communication method according to Claim 2, wherein the Measurement Report message contains strength of wireless LAN.

4. The communication method according to Claim 2 or 3, wherein the Measurement Report message contains identification information related to wireless LAN.

5. The communication method according to Claim 4, wherein the identification information related to wireless LAN contains SSID (Service set identification).

6. The communication method according to Claim 4 or 5, wherein the identification information related to wireless LAN contains BSSID (Basic service set identification).

7. The communication method according to any one of Claims 2 to 6, wherein the Request message contains TEID (Tunnel Endpoint Identifier) of the base station for mobile communication.

8. The communication method according to any one of Claims 2 to 7, wherein the Request message contains security information.

9. The communication method according to any one of Claims 2 to 8, wherein the Request Ack message contains TEID (Tunnel Endpoint Identifier) of the communication apparatus for wireless LAN.

10. The communication method according to any one of Claims 1 to 9, wherein the communication terminal receives, through the communication apparatus for wireless LAN, a service from an apparatus that is located in close proximity to the base station for mobile communication and provides application services.

11. A communication system for performing mobile communication and wireless LAN (Local Area Network) communication with a communication terminal, comprising:
a base station for mobile communication; and
a communication apparatus for wireless LAN, wherein
an interface is set between the base station for mobile communication and the communication apparatus for wireless LAN, and
user data is transferred from the base station for mobile communication to the communication apparatus for wireless LAN or from the communication apparatus for wireless LAN to the base station for mobile communication by using the interface.

12. The communication system according to Claim 11, wherein
the base station for mobile communication receives a Measurement Report message from the communication terminal,
the base station for mobile communication sends a Request message to the communication apparatus for wireless LAN,
the base station for mobile communication receives a Request Ack message from the communication apparatus for wireless LAN, and
a transmission path is set between the base station for mobile communication and the communication apparatus for wireless LAN.

13. The communication system according to Claim 12, wherein the Measurement Report message contains strength of wireless LAN.

14. The communication system according to Claim 12 or 13, wherein the Measurement Report message contains identification information related to wireless LAN.

15. The communication system according to Claim 14, wherein the identification information related to wireless LAN contains SSID (Service set identification).

16. The communication system according to Claim 14 or 15, wherein the identification information related to wireless LAN contains BSSID (Basic service set identification).

17. The communication system according to any one of Claims 12 to 16, wherein the Request message contains TEID (Tunnel Endpoint Identifier) of the base station for mobile communication.

18. The communication system according to any one of Claims 12 to 17, wherein the Request message contains security information.

19. The communication system according to any one of Claims 12 to 18, wherein the Request Ack message contains TEID (Tunnel Endpoint Identifier) of the communication apparatus for wireless LAN.

20. The communication system according to any one of Claims 11 to 19, wherein the communication terminal receives, through the communication apparatus for wireless LAN, a service from an apparatus that is located in close proximity to the base station for mobile communication and provides application services.

21. A base station for mobile communication, comprising:
an interface for wireless communication that receives a Measurement Report message from a communication terminal; and
an interface for communication that sends a Request message to a communication apparatus for wireless LAN (Local Area Network) and receives a Request Ack message from the communication apparatus for wireless LAN, wherein
the base station for mobile communication sends user data to the communication apparatus for wireless LAN or receives user data from the communication apparatus for wireless LAN by using the interface for communication.

22. A communication apparatus for wireless LAN (Local Area Network), comprising:
an interface for wireless communication that communicates with a communication terminal;
an interface for communication that receives a Request message from a base station for mobile communication and sends a Request Ack message to the base station for mobile communication, wherein
the communication apparatus for wireless LAN sends user data to the base station for mobile communication or receives user data from the base station for mobile communication by using the interface for communication.
